# EUROPEAN PATENT APPLICATION

(11) **EP 3 457 343 A1**
(43) Date of publication of application: **20.03.2019**
(21) Application number: 17908363.9
(22) Date of filing: 22.09.2017
(51) Int. Cl.: G06Q 20/06

(54) **VIRTUAL CURRENCY TRANSACTION STORAGE SYSTEM AND USAGE METHOD THEREOF**

(30) Priority: 05.05.2017 CN 201710313100
(71) Applicant: Beijing Coldlar Information Technology Co., Ltd., Beijing 100000 (CN)
(72) Inventor: YUAN, Dawei, Beijing 100000 (CN); ZHOU, Yefei, Chengdu Sichuan 610000 (CN)
(74) Representative: Loock, Jan Pieter
(86) International application number: PCT/CN2017/102850
(87) International publication number: WO 2018/201657

(57) **Abstract**

Embodiments of the present invention provide a virtual currency storage and transaction system and using method thereof. The system comprises a first terminal and a second terminal. The first terminal is in a state of network disconnection, for generating a private key for encrypting a virtual currency wallet according to a seed password and a customized password and generating a storage address with an identification code corresponding to the private key, so as to receive the virtual currency paid to the storage address; also for paying the virtual currency to a third party corresponding to the payment address according to the input payment address. The second terminal is in a state of network connection, for issuing transaction information for payment of the virtual currency to the third party. The first terminal and the second terminal mutually scan the identification code on the display interface for information interaction. The using method uses the above-mentioned system. The virtual currency storage and transaction system and using method thereof provided in the present embodiments guarantee the safety during the storage and transaction of virtual currency.

## Description

### CROSS REFERENCE

The present application claims priority to Chinese patent application No. 2017103131003, filed on May 5, 2017, entitled "virtual currency storage and transaction system and using method thereof', which is incorporated herein by reference in its entirety.

### TECHNICAL FIELD

Embodiments of the present invention relate to the field of virtual currency payment, and specifically, to a virtual currency storage and transaction system and using method thereof.

### BACKGROUND

In the day with rapid development of information technology, material currency is far from satisfying people's requirements for financial flow. Virtual currency is created accordingly, which may comprise Bitcoin, Litecoin, etc., and refers to information flow or data flow which substitutes the circulation of material currency in high-technology.

Existing virtual currency is stored in servers of respective operating companies. When there is a need for recharge and payment, the transaction is completed through networks. However, private information such as accounts is easily stolen by criminals by means of storing virtual currency in remote servers and transacting through networks, which brings security risks to the storage and transaction of virtual currency.

Therefore, it becomes an urgent problem need to be solved to guarantee the safety during the storage and transaction of virtual currency.

### SUMMARY

With respect to the problem existing in the prior art, the present invention provides a virtual currency storage and transaction system and using method thereof.

On the one hand, the present invention provides a virtual currency storage and transaction system, comprising:
a first terminal and a second terminal, wherein:
the first terminal is in a state of network disconnection, for generating a private key for encrypting a virtual currency wallet according to a seed password for storing the virtual wallet or according to the seed password and a customized password, and generating a storage address with an identification code corresponding to the private key, so as to receive the virtual currency paid to the storage address;
also for paying the virtual currency to a third party corresponding to the payment address according to the input payment address;
the second terminal is in a state of network connection, for issuing transaction information for payment of the virtual currency to the third party;
the first terminal and the second terminal mutually scan the identification code on the display interface for information interaction.

On the other hand, the present invention provides a method of using the above-mentioned virtual currency storage and transaction system comprising:
with respect to the first terminal:
displaying an input box for inputting the customized password if a sending action triggered after inputting an amount to be paid and the payment address is received;
generating an identification code for the amount to be paid for scanning by the second terminal if the customized password and a verification action for the customized password is received and the customized password is determined to be correct;
with respect to the second terminal:
scanning an identification code of the first terminal for the amount to be paid; confirming to send the transaction action of paying the amount to be paid to the third party and forming transaction record information if a trigger of confirming to send a transaction action is received.

The virtual currency storage and transaction system and using method thereof provided in the present embodiments guarantee the safety during the storage and transaction of virtual currency.

### BRIEF DESCRIPTION OF THE DRAWINGS

In order to more clearly explain the embodiments of the present invention or the technical solutions in the prior art, a simple introduction will be made for the embodiments or drawings required to be used in the description in the prior art. It will be apparent to those of ordinary skilled in the art that the drawings in the following description are some embodiments of the present invention, and other drawings may be obtained from these drawings without paying creative work.
Fig 1 is a structural schematic diagram of the virtual currency storage and transaction system provided in an embodiment of the present invention;
Fig 2 is a screenshot of a transaction process in the method using the system according to an embodiment of the present invention;
Fig 3 is a screenshot of updating the amount of virtual currency in the method using the system according to an embodiment of the present invention;
Fig 4 is a screenshot of a pre-configuration for creating a new wallet in the method using the system according to an embodiment of the present invention;
Fig 5 is a screenshot of a pre-configuration for recovering an existing wallet in the method using the system according to an embodiment of the present invention;
Fig 6 is a screenshot of presetting common payment addresses in the method using the system according to an embodiment of the present invention.

### DETAILED DESCRIPTION

In order to make the purposes, technical solutions and advantages of the embodiments of the present invention more clear, hereinafter, apparent and full descriptions for the technical solutions in the embodiments of the present invention will be made in combination with the drawings in the embodiments of the present invention. It is apparent that the described embodiments are a part of the embodiments of the present invention, not all of the embodiments. Based on the embodiments of the present invention, all of other embodiments obtained by those of ordinary skilled in the art without creative work belong to the scope of the present invention.

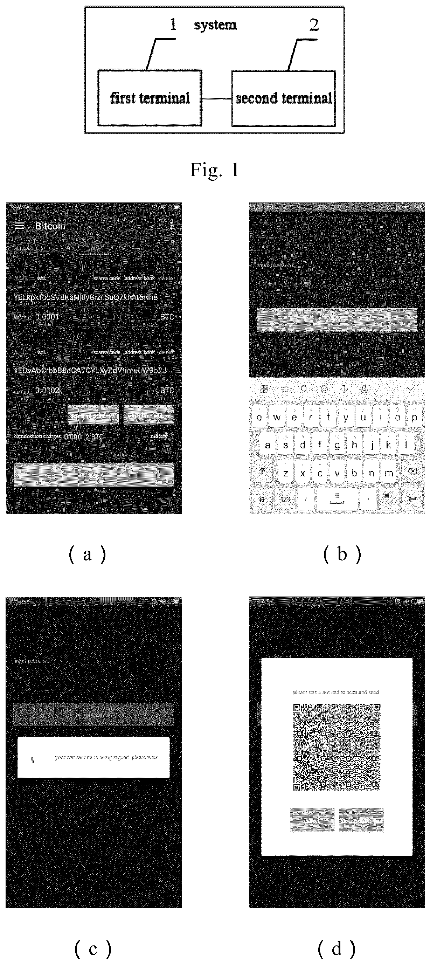

Fig 1 is a structural schematic diagram of the virtual currency storage and transaction system provided in an embodiment of the present invention. As illustrated in Fig 1, the virtual currency storage and transaction system provided in the embodiment of the present invention comprises a first terminal 1 and a second terminal 2, wherein:

The first terminal 1 is in a state of network disconnection, and may be customized so as to not have the function of network connection. The first terminal 1 may be used to generate a private key for encrypting a virtual currency wallet according to a seed password for storing the virtual wallet or according to the seed password and a customized password, that is, each seed password may correspond to a plurality of private keys. The type of virtual currency may be Bitcoin, Litecoin, etc., and the virtual currency wallet may be understood as an account registered at the first terminal 1. The seed password may be randomly generated in the first terminal 1, and the specific generation method is a mature technology in the field, and thus, details are not described herein again. One seed password may correspond to various different types of virtual currency. After obtaining, the seed password needs backup and cannot be disclosed to other people. Loss of the seed password causes the virtual currency in the wallet to be lost. Specific backup methods may comprise transcribing the seed password or copy and paste it into documents, etc. The customized password may be a password which prompts users to set by themselves after generating the seed password, and may comprise several letters or numbers. The private password is generated by the seed password and the customized password by an elliptic curve encryption algorithm or generated by the seed password by an elliptic curve encryption algorithm. The safe storage of the virtual currency in the wallet may be guaranteed by the private key. The first terminal 1 may also be used to generate a storage address with an identification code corresponding to the private key, so as to receive the virtual currency paid to the storage address; the storage address can be understood as an address of the virtual currency in the wallet, and different types of virtual currency may correspond to different storage addresses, that is, Bitcoin corresponds to one type of storage addresses, whereas Litecoin corresponds to another type of storage address; the same type of virtual currency may also correspond to a plurality of different storage addresses, that is, if all of the types of the virtual currency are Bitcoin, it may also correspond to a plurality of different storage addresses; other terminals can pay the virtual currency to the storage address by scanning the identification code of the storage address, that is, the identification code of the storage address provides an entrance for outside to pay for the wallet.

The first terminal 1 is also used to pay the virtual currency to a third party corresponding to the payment address according to the input payment address. The payment address may be displayed on the display interface of the first terminal 1, and the third party may be understood as another terminal that receives the virtual currency paid by the wallet within the first terminal 1.

The second terminal 2 is in a state of network connection, for issuing transaction information for payment of the virtual currency to the third party, and sending the transaction information to relevant blockchain networks according to different types of the virtual currency. That is, if the type of the virtual currency is Bitcoin, sending the transaction information to a blockchain network related to Bitcoin; and if the type of the virtual currency is Litecoin, sending the transaction information to a blockchain network related to Litecoin. The second terminal 2 may also be used to scan the identification code on the first terminal 1 to obtain the updated amount of the virtual currency. The second terminal 2 connects to the third party through the network, thereby realizing the process of payment transaction. The transaction information may comprise transaction time, transaction amount, commission charges, etc.

The first terminal 1 and the second terminal 2 mutually scan the identification code on the display interface for information interaction. There is a need to authorize to access a camera on the corresponding first terminal 1 or second terminal 2. That is, the second terminal 2 may scan the identification code on the display interface of the first terminal 1 (by authorizing to access the camera on the second terminal 2), the first terminal 1 may scan the identification code on the display interface of the second terminal 2 (by authorizing to access the camera on the first terminal 1), thereby transmitting the information through the identification code instead of electromagnetic wave, and thus guaranteeing the safety of the private key.

The virtual currency storage and transaction system provided in the present embodiments is capable of guaranteeing the safety during the storage and transaction of virtual currency.

On the basis of the above-mentioned embodiments, the identification code is a two-dimensional code, and may also comprise a barcode, etc., which is not specifically limited herein.

The virtual currency storage and transaction system provided in the present embodiments selects the identification code as the commonly used two-dimensional code, which is conducive to the widespread use of the system.

On the basis of the above-mentioned embodiments, the private key is also used to generate a public key, which is used to generate the storage address, wherein the public key is a string of binary codes.

The virtual currency storage and transaction system provided in the present embodiments is capable of being more convenient for the third party to obtain the storage address by the public key, which is conducive to the promotion of the system.

On the basis of the above-mentioned embodiments, the public key and the private key are generated in pairs by the elliptic curve encryption algorithm. The private key can be the same as the public key, containing a string of binary codes. The public key may be publicly displayed, whereas the private key is permanently hidden.

The virtual currency storage and transaction system provided in the present embodiments generates the public key and the private key in pairs by the elliptic curve encryption algorithm, such that the generated private key is difficult to be deciphered, and the storage of the virtual currency is more secure.

On the basis of the above-mentioned embodiments, the payment address is pre-stored in the first terminal 1 and is provided with a tag. Since the payment address is input each time when the virtual currency is paid to the third party, the more commonly used payment address may be pre-stored in the first terminal 1. The tag may be the name corresponding to the payment address, etc. so as to facilitate the operation of the payment process.

The virtual currency storage and transaction system provided in the present embodiments stores the payment addresses in the first terminal and sets the tags, which facilities the payment process.

On the basis of the above-mentioned embodiments, the first terminal 1 is also used to recover the seed password by using the customized password. When the seed password is forgotten, the seed password may be restored by the customized password.

The virtual currency storage and transaction system provided in the present embodiments recovers the customized password by using the seed password, such that even if the customized password is forgotten, the system may also continue to be used, which makes the system easier to use.

The present invention provides a method of using the above-mentioned system, comprising:
with respect to the first terminal:
displaying an input box for inputting the customized password if a sending action triggered after inputting an amount to be paid and the payment address is received.

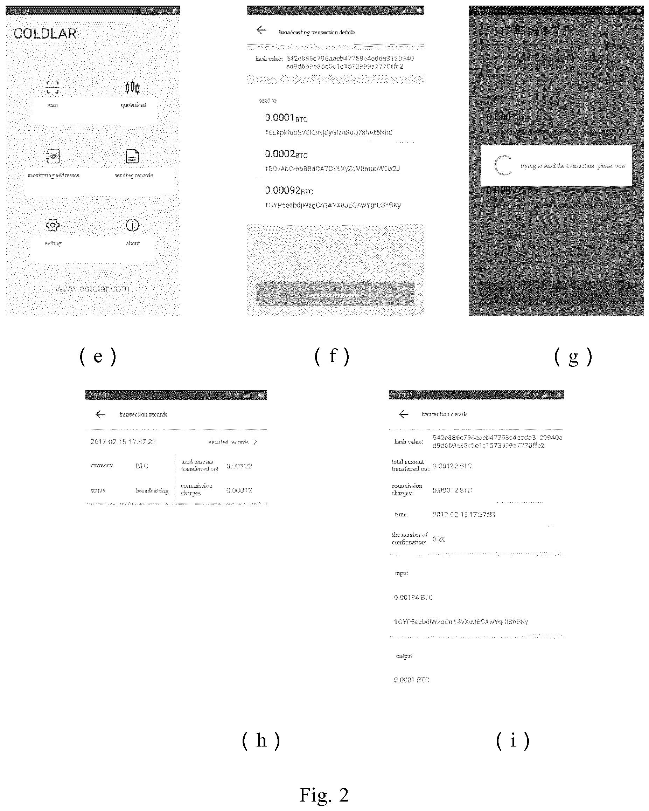

Specifically, the first terminal displays an input box for inputting the customized password if a sending action triggered after inputting an amount to be paid and the payment address is received. Fig 2 is a screenshot of a transaction process in the method using the system according to an embodiment of the present invention. As illustrated in Fig 2(a), the billing address corresponds to the payment address of the embodiment of the present invention. A plurality of amounts to be paid and the payment address may be input and sent at the same time. It is illustrated in Fig 2(b) that the first terminal receives a sending action triggered after inputting an amount to be paid and the payment address.

Generating an identification code for the amount to be paid for scanning by the second terminal if the customized password and a verification action for the customized password are received and the customized password is determined to be correct.

Specifically, if the customized password and a verification action for the customized password is received and the customized password is determined to be correct, the first terminal generates an identification code for the amount to be paid for scanning by the second terminal. As illustrated in Fig 2(c) is a waiting prompt for the transaction process. Thereafter, as illustrated in Fig 2(d), the identification code generated for the amount to be paid is displayed on the display interface of the first terminal, wherein the "hot end" corresponds to the second terminal in the embodiments of the present invention, and may also display the scanning status which comprises canceled or sent.
with respect to the second terminal:
scanning an identification code of the first terminal for the amount to be paid; confirming to send the transaction action of paying the amount to be paid to the third party and forming transaction record information if a trigger of confirming to send a transaction action is received.

Specifically, the second terminal scans an identification code of the first terminal for the amount to be paid; confirming to send the transaction action of paying the amount to be paid to the third party and forming transaction record information if a trigger of confirming to send a transaction action is received. As illustrated in Fig 2(e), the second terminal scans the identification code of the first terminal for the amount to be paid by "scanning". Thereafter, as illustrated in Fig 2(f), the information comprising the payment address and the amount to be paid are displayed so as to trigger an action of confirming to "send transaction". If the action triggered for confirming to send transaction is received, as illustrated in Fig 2(g), the waiting prompt for sending transaction is displayed. Thereafter, as illustrated in Figs 2(h) and 2(i), the transaction record information is displayed, which may comprise transaction time, transaction amount, commission charges, etc.

The method of using the virtual currency storage and transaction system provided in the present embodiments guarantee the safety during the storage and transaction of virtual currency.

On the basis of the above-mentioned embodiments, the method also comprises updating the virtual currency of the first terminal:
with respect to the first terminal:
displaying the identification code of the storage address for scanning by the second terminal if the triggering action of refreshing the balance is received.

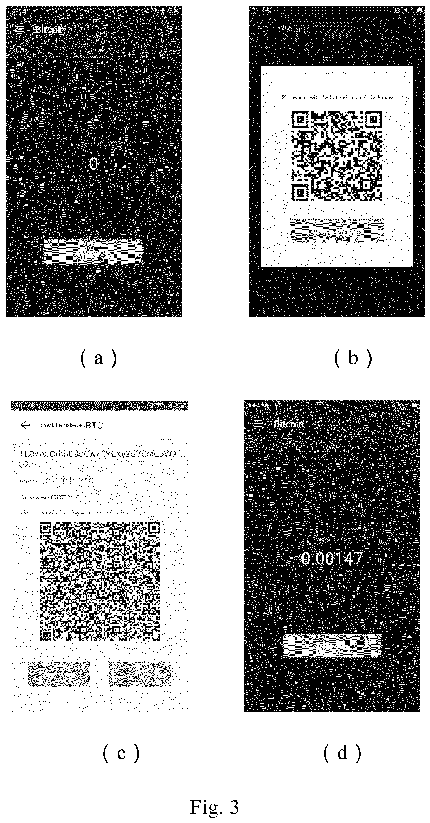

Specifically, if receiving triggering action of refreshing the balance, the first terminal displays the identification code of the storage address for scanning by the second terminal. Fig 3 is a screenshot of updating the amount of virtual currency in the method using the system according to an embodiment of the present invention. If the triggering action of refreshing the balance as illustrated in Fig 3(a) is received, the identification code of the storage address as illustrated in Fig 3(a) is displayed.

Scanning the identification code returned by the second terminal after it scans the identification code of the storage address, so as to update the amount of the virtual currency.

Specifically, the first terminal scans the identification code returned by the second terminal after it scans the identification code of the storage address, so as to update the amount of the virtual currency. As illustrated in Fig 3(c), the identification code scanned by the first terminal is an identification code displayed on the interface of the second terminal and generated in the second terminal to update the amount of the virtual currency according to the identification code of the storage address. After scanning, the updated amount of the virtual currency as illustrated in FIG. 3 (d) is displayed on the first terminal.
with respect to the second terminal:
Scanning the identification code corresponding to the storage address generated by the first terminal, and generating an identification code for updating the amount of the virtual currency for scanning by the first terminal.

Specifically, the second terminal scans the identification code corresponding to the storage address generated by the first terminal, and generates an identification code for updating the amount of the virtual currency for scanning by the first terminal. As illustrated in Fig 3(c), the second terminal generates the identification code for updating the amount of the virtual currency according to the identification code of the storage address, wherein "cold wallet" corresponds to the first terminal, and the number of UTXOs corresponds to data for updating the identification code of the amount of virtual currency (if the data volume is large, a plurality of fragments of the identification code may be scanned one by one).

The method of using the virtual currency storage and transaction system provided in the present embodiments guarantee the safety in the process of updating the amount of virtual currency.

On the basis of the above-mentioned embodiments, pre-configuring the first terminal before the method, comprising:
displaying a first prompt information of prompting the user to back up the seed password of the existing wallet if a triggering action of creating a new wallet is received.

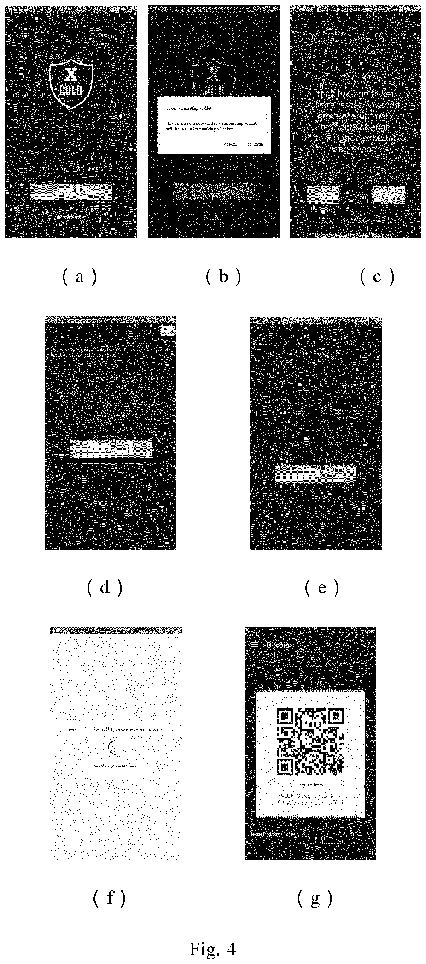

Specifically, if receiving a triggering action of creating a new wallet, the first terminal displays first prompt information of prompting the user to back up the seed password of the existing wallet. Fig 4 is a screenshot of a pre-configuration for creating a new wallet in the method using the system according to an embodiment of the present invention. An initial interface is illustrated in Fig 4(a). As illustrated in Fig 4(b), if a triggering action of creating a new wallet is received, a floating box on the first terminal displays first prompt information of prompting the user to back up the seed password of the existing wallet.

Generating a seed password of the new wallet and second prompt information of prompting the user to back up the seed password of the new wallet if a confirmation action triggered for the first prompt information is received.

Specifically, if receiving a confirmation action triggered for the first prompt information, the first terminal generates a seed password of the new wallet and second prompt information of prompting the user to back up the seed password of the new wallet. If receiving a confirmation action triggered for the first prompt information, the first terminal displays the interface as illustrated in Fig 4(c). The interface displays the generated seed password of the new wallet and the second prompt information under the seed password, which corresponds to "I have already copied the password and kept it in a safe place". For users' convenience, buttons of "copy" and "generate QR Code" can also be displayed. Returning to display the interface as illustrated in Fig 4(a) if a canceling action triggered for the first prompt information is received.

Displaying an input box of re-entering the seed password of the new wallet if a confirmation action triggered for the second prompt information is received.

Specifically, if receiving a confirmation action triggered for the second prompt information, the first terminal displays an input box of re-entering the seed password of the new wallet. As illustrated in Fig 4(d), if receiving a confirmation action triggered for the second prompt information, the first terminal displays an input box of re-inputting the seed password of the new wallet. Operations of coping and pasting may be performed on the above-mentioned seed passwords.

Displaying the input box for setting a customized password and the confirmation input box for the customized password if confirmation information for contents input in the input box of the seed password is received and the input contents are determined to be correct.

Specifically, if receiving confirmation information for contents input in the input box of the seed password and determining the contents input to be correct, the first terminal displays the input box for setting a customized password and the confirmation input box for the customized password. If receiving a confirmation information for contents input in the input box of the seed password and determining the contents input to be correct, the first terminal displays an interface as illustrated in Fig 4(e), which displays the input box for setting a customized password and the confirmation input box for the customized password.

Generating a private key of the new wallet and a corresponding storage address for storing the virtual currency according to the seed password and the customized password if an input box of the customized password and the confirmation information of confirming the input box are received.

Specifically, if receiving an input box of the customized password and the confirmation information of confirming the input box, the first terminal generates a private key of the new wallet and a corresponding storage address for storing the virtual currency according to the seed password and the customized password. If receiving an input box of the customized password and the confirmation information of confirming the input box, the first terminal displays an interface of waiting prompt illustrated in Fig 4(f), the identification code of the storage address as illustrated in Fig 4(g) and the public key below.

Or,
Displaying the input box for inputting the seed password of the existing wallet if a triggering action of recovering the existing wallet is received.

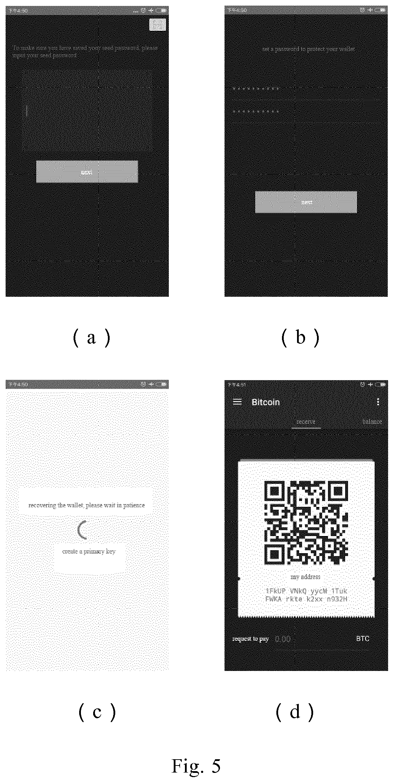

Specifically, if receiving a triggering action of recovering the existing wallet, the first terminal displays the input box for inputting the seed password of the existing wallet. Fig 5 is a screenshot of a pre-configuration for recovering an existing wallet in the method using the system according to an embodiment of the present invention. As illustrated in Fig 5(a), if receiving a triggering action of recovering the existing wallet, the first terminal displays the input box for inputting the seed password of the existing wallet.

Displaying the input box for setting a customized password and the confirmation input box for the customized password if a confirmation information for contents input in the input box of the seed password of the existing wallet is received and the contents input is determined to be correct.

Specifically, if receiving confirmation information for contents input in the input box of the seed password of the existing wallet and determining the contents input to be correct, the first terminal displays the input box for setting a customized password and the confirmation input box for the customized password. If receiving a confirmation information for contents input in the input box of the seed password of the existing wallet and determining the contents input to be correct, the first terminal displays an interface as illustrated in Fig 5(b), which displays the input box for setting a customized password and the confirmation input box for the customized password.

Generating a private key of the existing wallet and a corresponding storage address for storing the virtual currency according to the seed password and the customized password if an input box of the customized password and the confirmation information of confirming the input box are received.

Specifically, if receiving an input box of the customized password and the confirmation information of confirming the input box, the first terminal generates a private key of the existing wallet and a corresponding storage address for storing the virtual currency according to the seed password and the customized password. If receiving an input box of the customized password and the confirmation information of confirming the input box, the first terminal displays an interface of waiting prompt illustrated in Fig 5(c), the identification code of the storage address as illustrated in Fig 5(d) and the public key below.

The method of using the virtual currency storage and transaction system provided in the present embodiments pre-configures the system, thereby guaranteeing normal use of the system.

On the basis of the above-mentioned embodiments, the method comprises: displaying the identification code of the amount to be paid in fragments.

Specifically, the second terminal displays the identification code of the amount to be paid in fragments. When the data volume of the amount to be paid is large, a plurality of identification codes for the amount to be paid may be displayed in fragments for the first terminal to scan one by one.

The method of using the virtual currency storage and transaction system provided in the present embodiments displays the identification code of the amount to be paid in fragments, such that even if the amount to be paid is large, the system operates normally.

A brief introduction is made below for the settings of the commonly used payment addresses:

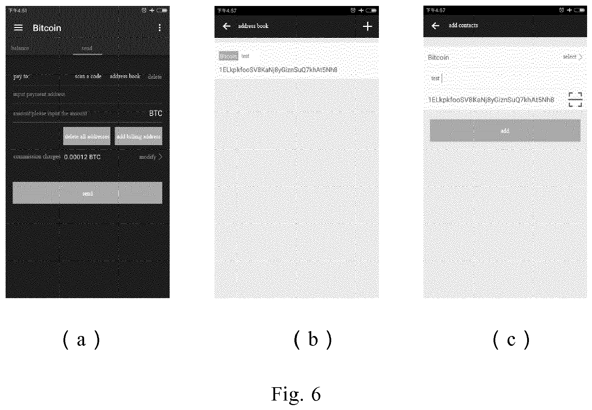

Fig 6 is a screenshot of presetting common payment addresses in the method using the system according to an embodiment of the present invention. Switching to the interface as illustrated in Fig 6(a). If a triggering action of "address book" is received, the interface illustrated in Fig 6 (b) is displayed. If a triggering action of the option on the interface illustrated in FIG. 6 (b) is received, the interface illustrated in FIG. 6 (c) is displayed. The name, symbol, etc. corresponding to the payment address may be input on the interface so as to facilitate subsequent operations.

The method of using the virtual currency storage and transaction system provided in the present embodiments stores the payment addresses in the first terminal and sets the tags, which facilities the payment process.

It may be understood by those of ordinary skilled in the art that the realization for all or part of the steps of the method embodiments described above may be accomplished by hardware related to program instructions, the foregoing programs may be stored in a computer-readable storage medium, and the steps of the method embodiments described above are performed when the programs are executed; and the foregoing storage medium comprises: ROM, RAM, magnetic disk, or optical disk and other various medium that can store program codes.

The embodiments described above are merely illustrative, wherein the units described above as separate components may or may not be physically separate, and the components shown as units may or may not be physical units, that is, may be located in one place or also may be distributed onto multiple network elements. Some or all of the modules may be selected according to actual requirements to achieve the objectives of the solutions of the embodiments. Those of ordinary skilled in the art may understand and implement the present invention without creative work.

Through the description of the embodiments above, those skilled in the art may clearly understand that each embodiment may be realized by software plus a necessary general hardware platform and of course may be realized by hardwires. Based on such understanding, the essential part or the part that makes contribution to the prior art of the above-mentioned technical solution may be embodied in the form of a software product, which may be stored in a computer readable storage medium such as ROM/RAM, magnetic disk, optical disk, etc., comprising several instructions to make a computer apparatus (may be a personal computer, server, or network apparatus, etc.) to perform respective embodiments or the method described in some part of the embodiments.

Finally, it is to be noted that the embodiments above are only used to explain the technical solutions of the embodiments of the present invention, and are not intended to be limiting thereto; although the embodiments of the present invention has been described in detail with reference to the various foregoing embodiments, it should be understood by those of ordinary skilled in the art that the technical solutions described in the foregoing embodiments may be modified or equivalently replaced with some or all of the technical features; while these modifications or replacements do not make the essence of corresponding technical solutions to depart from the scope of various embodiments of the present invention.

## Claims

1. A virtual currency storage and transaction system, **characterized in that**, it comprises a first terminal and a second terminal, wherein:
the first terminal is in a state of network disconnection, for generating a private key for encrypting a virtual currency wallet according to a seed password for storing the virtual currency wallet or according to the seed password and a customized password, and generating a storage address with an identification code corresponding to the private key, so as to receive the virtual currency paid to the storage address;
also for paying the virtual currency, based on an input payment address, to a third party corresponding to the input payment address;
the second terminal is in a state of network connection, for issuing transaction information for payment of the virtual currency to the third party;
the first terminal and the second terminal mutually scan the identification code on the display interface for information interaction.

2. The system of claim 1, **characterized in that**, the identification code is a two-dimensional code.

3. The system of claim 2 or 3, **characterized in that**, the private key is also used for generating a public key, which is used to generate the storage address, wherein the public key is a string of binary codes.

4. The system of claim 3, **characterized in that**, the public key and the private key are generated in pairs by the elliptic curve encryption algorithm.

5. The system of claim 4, **characterized in that**, the payment address is pre-stored in the first terminal and is provided with a tag.

6. The system of claim 1, 2, 4, or 5, **characterized in that**, the first terminal is also used for recovering the seed password by using the customized password.

7. A method using the system of claim 1, **characterized in that**:
the first terminal is configured for:
displaying an input box for inputting the customized password if a sending action triggered after inputting an amount to be paid and the payment address is received;
generating an identification code for the amount to be paid for scanning by the second terminal if the customized password and a verification action for the customized password is received and the customized password is determined to be correct;
and the second terminal is configured for:
scanning an identification code of the first terminal for the amount to be paid; confirming to send the transaction action of paying the amount to be paid to the third party and forming transaction record information if a trigger of confirming to send a transaction action is received.

8. The method of claim 7, **characterized in that**, the method also comprises updating the virtual currency of the first terminal:
wherein, the first terminal is configured for:
displaying the identification code of the storage address for scanning by the second terminal if the triggering action of refreshing the balance is received;
scanning the identification code returned by the second terminal after it scans the identification code of the storage address, so as to update the amount of the virtual currency;
and the second terminal is configured for:
scanning the identification code corresponding to the storage address generated by the first terminal, and generating an identification code for updating the amount of the virtual currency for scanning by the first terminal.

9. The method of claim 7 or 8, **characterized in that**, pre-configuring the first terminal before the method, comprising:
displaying a first prompt information of prompting the user to back up the seed password of the existing wallet if a triggering action of creating a new wallet is received;
generating a seed password of the new wallet and a second prompt information of prompting the user to back up the seed password of the new wallet if a confirmation action triggered for the first prompt information is received;
displaying an input box of re-entering the seed password of the new wallet if a confirmation action triggered for the second prompt information is received;
displaying the input box for setting a customized password and the confirmation input box for the customized password if a confirmation information for contents input in the input box of the seed password is received and the contents input is determined to be correct;
generating a private key of the new wallet and a corresponding storage address for storing the virtual currency according to the seed password and the customized password if an input box of the customized password and the confirmation information of confirming the input box are received;
or,
displaying the input box for inputting the seed password of the existing wallet if a triggering action of recovering the existing wallet is received;
displaying the input box for setting a customized password and the confirmation input box for the customized password if a confirmation information for contents input in the input box of the seed password of the existing wallet is received and the contents input is determined to be correct;
generating a private key of the existing wallet and a corresponding storage address for storing the virtual currency according to the seed password and the customized password if an input box of the customized password and the confirmation information of confirming the input box are received.

10. The method of claim 7 or 8, **characterized in that**, it comprises: displaying the identification code of the amount to be paid in fragments.
